## Europäisches Patentamt

## European Patent Office

## Office européen des brevets

(11) Publication number: **0 417 358 A1**

# EUROPEAN PATENT APPLICATION

(21) Application number: 89309245.2

(22) Date of filing: 12.09.89

(51) Int. Cl.⁵: **B01D 12/00**

(43) Date of publication of application:
20.03.91 Bulletin 91/12

(84) Designated Contracting States:
AT BE CH DE ES FR GB GR IT LI LU NL SE

(71) Applicant: DU PONT-MITSUI FLUOROCHEMICALS CO., LTD
2-3, 1-Chome, Otemachi Chiyoda-Ku Tokyo(JP)

(72) Inventor: Sasahara, Kenichi
5-30, Konan-cho
Shimizu-shi Shizuoka-ken(JP)
Inventor: Yamashiro, Rika
503-7, Furusho
Shizuoka-shi Shizuoka-ken(JP)

(74) Representative: Myerscough, Philip Boyd et al
J.A.Kemp & Co. 14, South Square Gray's Inn
London, WC1R 5EU(GB)

(54) Solvent composition for dehydration.

(57) A solvent composition for dehydration obtained by mixing a saturated aliphatic amine salt of a monoalkyl phosphate and or dialkyl phosphate to 1.1-dichloro-2,2,2-trifluoroethane.

# SOLVENT COMPOSITION FOR DEHYDRATION

The present invention relates to a composition for removal of water adhered to the surface of article.

Heretofore, in the machine industry, precision machinery industry, electronic industry and the like, encouraged as methods for drying parts made of metals, plastics, glass and the like without heating at high temperatures after their washing with water is the use of methods of separating adhered water by its replacement by the solvent by immersing washed parts in solvent compositions for dehydration containing 1,1,2-trichloro-1,2,2-trifluoroethane (Flon 113) being a solvent having superior characteristics of lower toxcicity, noninflammability, lower corrosiveness and the like.

However, adhered water is not always rapidly replaced (drained) by conventional dehydrating solvent compositions containing Flon 113 and in addition, it is feared that Flon 113 released into the air might break ozone layer in the upper layer of the air, and problems for control over its use have now arisen.

The present invention is therefore designed to provide a solvent composition for dehydration being excellent in draining effect and free from the fear of breaking the ozone layer without losing advantages, such as lower toxicity, noninflammability, lower corrosiveness and the like, inherent in the said conventional dehydrating solvent compositions containing Flon 113.

According to the present invention, as one capable of achieving this objective, there is provided a solvent composition obtained by mixing a saturated aliphatic amine salt of a monoalkyl phosphate and/or dialkyl phosphate to 1,1-dichloro-2,2,2-trichloroethane (Flon 123).

The amount of the saturated aliphatic amine salt of monoalkyl phosphate or dialkyl phosphate mixed in the said composition is 0.01 to 10 %, preferably 0.1 to 5 %, and more preferably 0.1 to 1 %, based on the weight of Flon 123. If it is mixed in an amount less than 0.01 %, the draining effect is insufficient, and when it is mixed in an amount being in excess of 10 %, the salt remaining on the dehydrated article is increased, which forms a cause for stains or the like on the article surface.

The saturated aliphatic amine salt of monoalkyl phosphate or dialkyl phosphate is the reaction product of a monoalkyl phosphate or dialkyl phosphate and a saturated aliphatic amine.

The monoalkyl phosphate is compounds represented by the formula $RO(PO)(OH)_2$ and the dialkyl phosphate is compounds represented by the formula $(RO)_2(PO)OH$, respectively. In these formulas, R is an alkyl group containing 6 to 20 carbon atoms illustrated preferably by hexyl, octyl, dodecyl, tridecyl, tetradecyl, hexadecyl, octadecyl, isooctyl, 2-ethylhexyl and isodecyl groups and the like.

As the saturated aliphatic amine those with carbon atom numbers of 6-20 are preferred. As their examples there are cited primary amines, such as hexylamine, octylamine, 2-ethylhexylamine, 1,1,3,3-tetramethylbutylamine, decylamine and the like; secondary amines, such as ethylbutylamine, dipropylamine, hexylmethylamine, dibutylamine, butyloctylamine, octadecylmethylamine and the like; tertiary amines, such as triethylamine, decyldimethylamine, tributylamine, diethyloctylamine and the like.

For acceleration of drainage the composition of the present invention may optionally be incorporated with heretofore-known various surface active agents in addition to the said amine salt of alkyl phosphate. As such surface active agents there are cited alkylbenzenesulfonates, such as monoethanolamine salt of dodecyl benzenesulfonic acid, potassium salt of pentadecylbenzenesulfonic acid and the like; dialkylsulfosuccinates, such as sodium salt of dioctylsulfosuccinic acid and the like; aliphatic acid salts of aliphatic amines, such as dioleate of N-stearylpropylenediamine and the like; amine salts of laurylsulfates; quaternary ammonium salts of N,N,N,N-tetrakis-(2-hydroxypropyl)ethylenediamineoleate and dimethyl sulfate, and the like.

In the next place, the present invention will specifically be explained by way of non-limitative Example.

## Example

As a testpiece there was prepared a vinyl chloride resin plate 44 mm in length, 100 mm in width and 10 mm in thickness provided with 40 holes 1 mm in diameter bored through in the thickness direction.

Each hole of the testpiece was filled up with water, and it was immersed in a dehydration tank in which the dehydrating solvent composition was recycled by means of pump. Every 15, 30, 45 and 60 seconds after the immersion was initiated, the testpiece was taken up from the tank to measure numbers of drained holes and their propotion was recorded as percent dehydration (%). The results were shown in the following table.

| | | Example | Comparative Example |
|---|---|---|---|
| Dehydrating solvent composition | Kind of solvent | 1,1-Dichloro-2,2,2-trifluoroethane (Flon 123) | 1,1,2-Trichloro-1,2,2-trifluoroethane (Flon 113) |
| | Amount of alkyl phosphate amine salt(*) mixed | 0.3 % (**) | 0.3 % (**) |
| Percent dehydration | Immersion time | | |
| | 15 seconds | 6 | 0 |
| | 30 seconds | 12 | 0 |
| | 45 seconds | 14 | 0 |
| | 60 seconds | 16 | 1 |

\* 2-Ethylhexylamine salts of mono- and di-isooctyl phosphates
\*\* Weight % based on Flon

## Claims

1. A solvent composition for use in dehydration comprising a mixture of a saturated aliphatic amine salt of a monoalkyl phosphate and/or dialkyl phosphate with 1,1-dichloro-2,2,2-trifluoroethane.

2. A composition according to claim 1 wherein the amount of said salt is 0.01 to 10% based on the weight of 1,1-dichloro-2,2,2-trifluoroethane.

3. A composition according to claim 1 or 2 in which the monoalkyl phosphate or dialkyl phosphate contains a $C_6$ to $C_{20}$ alkyl group.

4. A composition according to claim 1, 2 or 3 in which the saturated aliphatic amine contains a $C_6$ to $C_{20}$ alkyl group.

5. Use of a solvent composition as claimed in any one of the preceding claims in drying a surface of an article by treating said surface with the solvent composition.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 075 871 (MONTEDISON S.p.A.) * Claims 1,3; page 4, line 11 - page 5, line 30 * | 1-5 | B 01 D 12/00 |
| Y | CH-A- 517 835 (E.I. DU PONT DE NEMOURS) * Claims * | 1-5 | |
| Y | FR-A-2 411 021 (E.I. DU PONT DE NEMOURS AND CO.) * Claims 1,3,5,7,8,17; page 6, lines 25-29 * | 1-5 | |
| A | US-A-4 655 958 (A.K. JUNG) | | |
| A | EP-A-0 090 677 (P C U K PRODUITS CHIMIQUES UGINE KUHLMAN) | | |

TECHNICAL FIELDS SEARCHED (Int. Cl.5)

B 01 D 12/00
C 27 G 5/00
C 11 D 7/00

The present search report has been drawn up for all claims

| Place of search | Date of completion of the search | Examiner |
|---|---|---|
| THE HAGUE | 17-05-1990 | TORFS F.M.G. |

EPO FORM 1503 03.82 (P0401)